# EUROPEAN PATENT SPECIFICATION

(11) **EP 3 817 973 B1**
(45) Date of publication and mention of the grant of the patent: **18.10.2023**
(21) Application number: 19749831.4
(22) Date of filing: 01.07.2019
(51) Int. Cl.: B63B 27/14, B63B 27/30, E01D 15/24, B66F 11/04

(54) **MOTION COMPENSATED TRANSFER SYSTEM, VESSEL AND USE THEREOF**
BEWEGUNGSKOMPENSIERTES ÜBERTRAGUNGSSYSTEM, SCHIFF UND VERWENDUNG DESSELBEN
SYSTÈME DE TRANSFERT À COMPENSATION DE MOUVEMENT, NAVIRE ET UTILISATION DE CELUI-CI

(30) Priority: 02.07.2018 NL 2021225
(43) Date of publication of application: 12.05.2021
(73) Proprietor: Safeway B.V., 3313 LA Dordrecht (NL)
(72) Inventor: VAN AALST, Gerbrand August Wijnand, 3313 LA Dordrecht (NL)
(74) Representative: V.O.
(86) International application number: PCT/NL2019/050404
(87) International publication number: WO 2020/009570

(56) References cited:
- WO-A1-2016/140577
- GB-A- 2 099 397
- KR-A- 20160 142 423
- US-A1- 2018 141 621

## Description

The present disclosure relates to a motion compensated transfer system for transferring persons and/or cargo from a vessel to an offshore object or vice versa, comprising a motion compensated boom, in particular a gangway, attached to a tower via a height-adjustable platform, wherein the tower is provided with a lift and/or staircase for enabling one or more persons and/or cargo to travel towards a respective height level of the height-adjustable platform and/or for enabling to bring one or more persons and/or cargo down from said height-adjustable platform.

Such motion compensated transfer systems, wherein the system has an integrated lift or so-called elevator in its tower, are known, and are for instance used to transfer persons and cargo from a vessel to an offshore structure, such as for example an offshore wind turbine, which can be provided with an entry platform or so-called landing platform which can be temporarily connected to a distal end of a gangway of such a motion compensated transfer system in order to provide a temporarily connection between the vessel and the offshore structure.

For example, the company Barge Master offers a motion compensated gangway system that combines a motion compensated gangway and a tower with an integrated lift or so-called elevator. The tower is beam shaped and protrudes from an upper deck of a vessel. One of the four sides of the beam shaped tower faces to a lateral side of the vessel, i.e. the starboard side or the port side, depending on how the tower is positioned on the vessel. Said one side of the beam shaped tower is at its outer side provided with an external lifting unit. Said external lifting unit is provided with a laterally extending support arm, which at its proximal end is fixed to the lifting unit and which at its distal end carries a height-adjustable platform that, together with said external lifting unit, is adjustable in height along the tower's respective lateral side's outer surface. An elevator or so-called lift is provided in the tower for lifting one or more persons and/or cargo towards said height-adjustable platform and/or for bringing one or more persons and/or cargo down from said height-adjustable platform. At the height-adjustable platform, a motion compensated gangway is provided. In order to compensate for vessel movements due to waves of up to about 3 meter, such as to keep the distal end of the gangway relatively still with respect to an entry platform at an offshore structure, the gangway can be luffed with respect to the height-adjustable platform about a substantially horizontal axis, the gangway can be telescoped in and out to adjust its length, and the height-adjustable platform together with the attached gangway can be slewed with respect to the external lifting unit about a substantially vertical axis. During use of the system, when one or more persons and/or cargo has to be transferred, the gangway can extend in a substantially sideward direction, i.e. in the starboard direction or the port direction, depending on how the tower is installed at the vessel. Since the platform can rotate to some extent about the substantially vertical axis, the gangway can be rotated to a position substantially in line with the longitudinal direction of the vessel in order to park gangway when it is not in use. However, a disadvantage of this system lies in that the gangway can thus only be used at one lateral side of the vessel, i.e. the starboard side or the port side, depending on how the tower is installed on the vessel. The platform can thus not be rotated to such extent as to enable the gangway to extend in a direction opposite to its normal sideward direction, as the tower forms an obstacle that will prevent this. The working area of the gangway can thus only cover one side of the vessel, which can prevent a user from adjusting the heading direction of the vessel to the direction of the waves, as the landing or entry platform of the offshore object would otherwise not be accessible for the gangway. As a result of a less favorable heading direction, the vessel movements may be relatively large, and may, depending on the wave conditions, even prevent the motion compensated gangway from being used.

The company SMST Designers & Constructors BV offers an access & cargo tower system that also combines a motion compensated gangway and a tower provided with an elevator, which system seems to counteract the above-mentioned disadvantage of the above-mentioned system of Barge Master. The tower of said access & cargo tower system is located centrally at a vessel, where the vessel movements due to waves are relatively small in comparison to the stern and the prow. The tower is beam shaped and protrudes from an upper deck the vessel. At its outer side surface, the front side of the tower, which faces the prow of the vessel, is provided with an external lifting unit carrying a non-rotatable platform that is fixed to said external lifting unit, together with which it is adjustable in height along the tower's front side's outer surface. Said non-rotatable platform is accessible from a lift provided in the tower. The external lifting unit further carries a pivotable support arm or so-called swivel arm, which at its proximal end is pivotably connected to the external lifting unit such as to be pivotably below the non-rotatable platform. The distal end of the pivotable support arm is pivotably connected to a rotatable platform provided at the same height level as the non-rotatable platform. When the rotatable platform can thus be brought from a first lateral side of the non-rotatable platform, e.g. the starboard side, towards a second lateral side of said non-rotatable platform, e.g. the port or so-called larboard side. The rotatable platform is provided with a motion compensated gangway. In order to compensate for vessel movements due to waves, the gangway can be luffed with respect to the rotatable platform about a substantially horizontal axis, the gangway can be telescoped in and out to adjust its length, and the rotatable platform together with the attached gangway can be slewed with respect to the pivotable support arm about a substantially vertical axis. Thanks to at least the pivotable support arm, the motion compensated gangway can thus be used at both the starboard side and the port side of the vessel. Moreover, since the pivotable support arm is sufficiently long to position the rotatable platform sidewardly outwards from the tower, the gangway can also be pivoted such as to extend in a rearward direction, along a lateral side of the tower in order to park the gangway substantially in line with the longitudinal direction of the vessel. Although this system of SMST thus seems to provide relatively much workability, a disadvantage of this system is its relatively complex design, which for instance has to enable that the pivoting support arm can form a sufficiently firm and sufficiently safe connection between the rotatable platform and the external lifting unit. Another example can be found in e.g. US 2018141621 A1.

It is an object of the present disclosure to provide an alternative motion compensated transfer system with an integrated lift and/or staircase in its tower. In particular, it can be an object of the present disclosure to provide a motion compensated transfer system with an integrated lift and/or staircase, wherein at least one of the disadvantages of the prior art compensated transfer systems with integrated lift is counteracted. More in particular, the present disclosure may aim to provide a compensated transfer system with an integrated lift and/or staircase, which at one hand can provide relatively much workability, and which on the other hand can be of a relatively simple and/or relatively reliable design.

Thereto, the present disclosure provides for a motion compensated transfer system for transferring persons and/or cargo from a vessel to an offshore object or vice versa, comprising a tower provided with an external lifting unit carrying a platform that together with the external lifting unit is adjustable in height along at least a part of said tower, the tower further being provided with a lift and/or staircase housed in a shaft extending in said tower, said lift and/or staircase being for enabling one or more persons and/or cargo to travel towards the height-adjustable platform and/or for bringing one or more persons and/or cargo down from said height-adjustable platform, the motion compensated transfer system further comprising a motion compensated boom arranged to extend, during use of the system, from the tower in a substantially sideward direction to enable transferring persons and/or cargo along said motion compensated boom, said motion compensated boom being attached to a boom support unit, wherein said boom support unit is rotatably carried by the external lifting unit such as to be rotatable with respect to said external lifting unit about a central axis of the tower.

By making the boom support unit, with the motion compensated boom attached thereto, rotatable about a central axis of the tower, the motion compensated boom can be rotated about the tower, such that can be prevented that the tower provided with the lift and/or staircase forms an obstruction for the motion compensated boom. The motion compensated boom can thus be brought into different positions in which it protrudes from the tower in a respective one of multiple different sideward directions. Hence, it can for instance be facilitated that a vessel provided with the motion compensated transfer system may be positioned next to an offshore object in a relatively favorable heading direction of the vessel, while the motion compensated gangway may still be brought in a position in which it can temporarily reach a desired part of the offshore object or so-called offshore structure, such as a boat-landing platform provided at an offshore wind turbine. The working areas of the boom may thus include a starboard side area, a larboard side area, an aft deck area, as well as a vessel's forepart area.

The external lifting unit may for instance be height-adjustable with respect to the tower by means of one or more lifting cables and one or more corresponding pulleys at an upper end of the tower and one or more winches, which may be provided at a lower end of the tower. Such lifting cables may be considered to be elements by means of which the external lifting unit engages the tower. Additionally, the tower may be provided with one or more guides, in particular guiding rails, which may extend in a substantially upward, preferably substantially vertical direction, which one or more guides may be engaged by one or more corresponding parts of the external lifting unit. Although lifting of the external lifting unit by means of one or more lifting cable is preferred, for instance as it can be relatively light due to the absence of lifting engines on the external lifting unit, other systems may alternatively or additionally be utilized, such as for example one or more rack and pinion systems.

By spreading the rack and pinion systems, and/or by spreading other elements by means of which the external lifting unit engages the tower such as guides and/or lifting cables, around the tower, the external lifting unit can be suspended relatively firmly and/or relatively simply, which may lead to a relatively simple and/or relatively reliable design.

Preferably, seen in a circumferential direction of the tower, i.e. seen in a substantially horizontally cross-section of the tower, the rack and pinion systems and/or other elements by means of which the external lifting unit engages the tower may be provided at different positions such that any two adjacent positions at which the external lifting unit engages the tower are not put apart over more than 180°, preferably over not more than 120°, which for instance may facilitate to spread forces relatively evenly over the tower.

For instance thereto, the external lifting unit can be formed as a lifting collar substantially enclosing the tower.

For instance for similar reasons, the boom support unit may in preferred embodiments also substantially enclose the tower.

Additionally or alternatively, the motion compensated transfer system may be arranged such that, seen in a circumferential direction of the tower, the boom support unit engages the external lifting unit at multiple positions such that, seen in said circumferential direction of the tower, any two adjacent positions at which the boom support unit engages the external lifting unit, are not put apart over more than 180°, preferably over not more than 120°. For example, the boom support unit may engage the external lifting unit substantially over its entire circumference.

In embodiments, the boom support unit may engage the external lifting unit via a rotary bearing, in particular a thrust bearing, such as a thrust ball bearing or a roller thrust bearing, for instance a cylindrical thrust roller bearing, a tapered roller thrust bearing, or a spherical roller thrust bearing.

By providing the height-adjustable platform, which may be attached to the boom support unit such as to be rotatably together with the boom support unit about the central axis of the tower, with a concave round edge part that substantially defines at least part of a circle, and by arranging the system such that said concave round edge part substantially fits on a convex round outer edge part of a local cross-section of the tower at least at an exit level of the lift and/or staircase, it can be facilitated that, at least at the exit level of the lift and/or staircase, the platform can butt up to a door opening, and for instance a lift cab of the lift and/or a landing of the staircase which may lie behind said door opening, relatively well, substantially irrespectively of the rotational position of the height-adjustable platform. Besides, when the boom support unit, to which the platform may be fixed, slews during use of the system in order to compensate at least part of vessel movements, a connection between the platform on the one hand and a floor of a lift cab and/or a landing or other part of the staircase on the other hand may be maintained when said platform slews or rotates. For example, the platform's concave round edge part may substantially define a circle and may substantially enclose the tower, and/or at least a part of the tower may have a substantially round cylindrical outer surface.

The present disclosure also relates to a vessel provided with a motion compensated transfer system. Further, the present disclosure relates to a use of such vessel and/or such motion compensated transfer system.

Advantageous embodiments according to the present disclosure are described in the appended claims.

By way of non-limiting examples only, embodiments of the present invention will now be described with reference to the accompanying figures in which:
Fig. 1 shows a schematic perspective view of a first embodiment of a motion compensated transfer system according to an aspect of the present disclosure in first position; and
Fig. 2 shows a schematic perspective side view of the motion compensated transfer system of Fig. 1 in a second position.

It is noted that the figures show merely a preferred embodiment according to the present disclosure. In the figures, the same or similar reference signs or numbers refer to equal or corresponding parts.

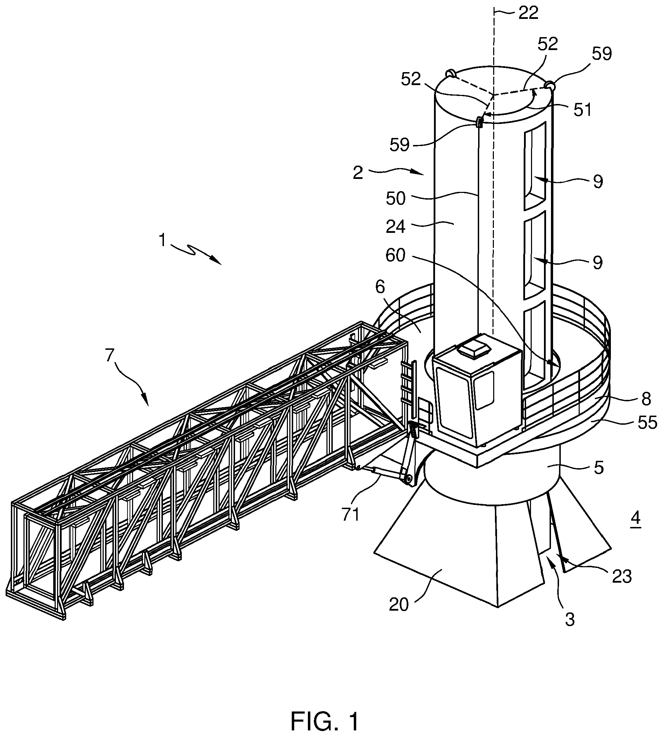

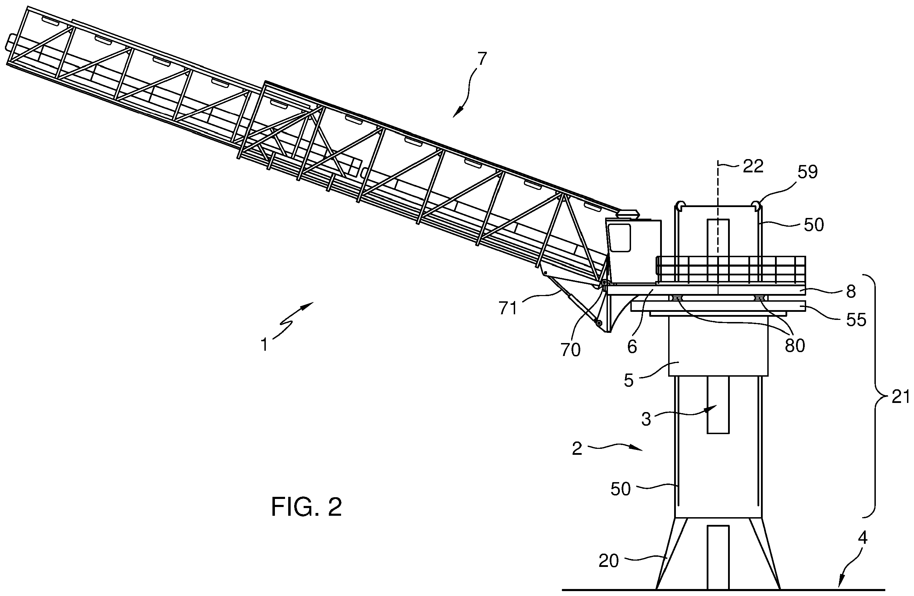

Figures 1 and 2 both show a motion compensated transfer system 1 for transferring persons and/or cargo from a vessel to an offshore object or vice versa. Regarding the offshore object, it is noted that it may be a substantially stationary offshore object or structure, such as a structure fixed to the sea bed, but that it alternatively may be a floating object or structure, e.g. a vessel, a floating offshore wind turbine, etc. The system 1 comprises a tower 2, which for instance may have a height of at least 8 meters, preferably at least 10 meters or least 12 meters, such as for instance about 15 meters or even more. Additionally or alternatively, the tower 2, preferably a substantially round cylindrical tower 2, may have width and/or a depth, preferably a diameter, of at least 2.5 meter, preferably at least 2.8 or 3 meter, such as about 3.5 meter.

The motion compensated transfer system 1 may be arranged to be mounted to a hull of the vessel, in particular to a deck, more in particular an upper deck, of said vessel, preferably in a releasably manner. This may for instance enable that the system 1 can be moved from one vessel to another, for example to facilitate leasing or renting out said system 1. The tower 2 may be provided with a pedestal 20, which for instance may have substantially rectangular footprint, and which for example may be provided at a lower end of the tower 2 such that it for instance can be placed on a deck 4 of the vessel. However, in alternative embodiments, the tower 2 may extend from above a deck 4 of the vessel to below said deck, for instance such that the tower 2, in particular a lift 3 and/or a staircase (not shown) provided within said tower 2, can be reached from below said deck 4, in particular from one or more lower decks located below said deck 4. Besides, in order to reach the lift 3 and/or the staircase from a main deck 4 or upper deck 4, the pedestal may be provided with a passageway 23.

The tower 2 is provided with an external lifting unit 5 which carries a platform 6 that together with said external lifting unit 5 is adjustable in height along at least a part 21 of said tower 2. For example, the external lifting unit 5 may be height-adjustable with respect to the tower 2 by means of one or more rack and pinion systems, wherein the racks thereof may extend at the outer side of the tower 2. However, alternatively or additionally, the system 1 may preferably be arranged to adjust the height of the external lifting unit 5 by alternative means, in particular by means of one or more lifting cables 50, in particular at least two lifting cables 50, more in particular at least three lifting cables 50. A system utilizing such lifting cables 50, and corresponding pulleys 59 provided at a top end of the tower 2, and winches, which for instance may be positioned at a lower end of the tower, may be advantageous, for example as it may be relatively light with respect to a system using one or more rack and pinion systems, especially as the external lifting unit 5 may then not need to be provided with lifting engines. Advantageously, the racks, and/or other elements by means of which the external lifting unit 5 engages the tower 2, such as guiding rails and/or lifting cables, can be spread around the tower 2, preferably spread substantially evenly. In particular, seen in a circumferential direction of the tower, i.e. seen in a substantially horizontally cross-section of the tower 2, the rack and pinion systems, and/or other elements by means of which the external lifting unit 5 can engage the tower 2, may be provided at different positions such that any two adjacent positions at which the external lifting unit engages the tower are not put apart over more than 180°, preferably over not more than 120°, which for instance may facilitate to spread forces relatively evenly over the tower 2. It will be appreciated that such an angle 51 can be understood as to be an angle 51 between two imaginary lines 52 extending radially from the imaginary central axis 22 of so-called longitudinal central line 22 of the tower 2 towards two adjacent positions where the external lifting unit 5 engages the tower 2.

In advantageous embodiments, the external lifting unit 5, which preferably substantially encloses the tower 2, can for example be formed as a lifting collar 5.

In embodiments, the tower 2, which can be provided with a lift 3 or so-called elevator 3, is provided with a shaft, in particular a lift shaft, housing said lift 3. Said lift 3 may for instance be standard lift 3 or so-called off-the-shelve product, which can also be used for onshore buildings. A lift cab or so-called lift car or lift cage may be movable within said lift shaft, for instance by means of one or more lift cables. However, alternative lifting means may be provided to adjust the height of the lift cab, such as for instance a rack and pinion system.

The lift 3 can be arranged for lifting one or more persons and/or cargo towards the height-adjustable platform 6 in order to enable said one or more persons and/or cargo to travel towards said height-adjustable platform 6. Additionally or alternatively, the lift 3 can be arranged for enabling to bring one or more persons and/or cargo down from said height-adjustable platform 6, for instance to an upper deck 4 or a lower deck. Preferably, the lift cab may have a floor surface that is sufficient to support at least an EUR-pallet, i.e. being more than 80 cm by 120 cm.

Alternatively or additionally, the tower 2, which can be provided with a staircase or so-called stairway or so-called stairs, is provided with a shaft, in particular a shaft forming a stairwell, housing said staircase or so-called stairway or so-called stairs. Said staircase may for instance comprise two or more stairs which can be joined or interconnected by means of one or more respective landings.

The staircase can be arranged for allowing one or more persons to climb, for instance while carrying cargo, towards the height-adjustable platform 6 in order to enable said one or more persons and/or cargo to travel towards said height-adjustable platform 6. Additionally or alternatively, the staircase can be arranged for enabling to bring one or more persons and/or cargo down from said height-adjustable platform 6, for instance to an upper deck 4 or a lower deck.

The motion compensated transfer system 1 further comprises a motion compensated boom 7, which preferably extends substantially radially away form the tower 2. In particular, the motion compensated boom 7 may be a motion compensated gangway 7. Said motion compensated boom 7 is arranged to extend, during use of the system 1, from the tower 2 in a substantially sideward direction to enable transferring persons and/or cargo along said motion compensated boom 7 from the vessel, in particular from the platform 6, to the offshore object or vice versa.

The motion compensated boom 7 is attached to a boom support unit 8 that is rotatably carried by the external lifting unit 5, in particular by a radially extending flange portion 55 of said external lifting unit 5. In particular, a proximal end of the boom 7 can be pivotably attached to said boom support unit 8. The boom support unit 8 can be rotated with respect to said external lifting unit 5 about the central axis 22 of the tower 2. The boom support unit 8 can thus be considered to be a slewing unit 8, and may be arranged to rotate about the tower 2 by rotating with respect to the external lifting unit 5.

The boom support unit 8, which in preferred embodiments may substantially enclose the tower 2, may, additionally or alternatively, engage the external lifting unit 5 at multiple positions 80, preferably such that, seen in said circumferential direction of the tower 2, any two adjacent positions 80 at which the boom support unit 8 engages the external lifting unit 5, are, with respect to the tower's central axis 22, not put apart over more than 180°, preferably over not more than 120°. In embodiments, the boom support unit 8 may for instance engage the external lifting unit 5 substantially over its entire circumference.

For example, the boom support unit 8, which may be supported on the external lifting unit 5, may engage said external lifting unit 5 via a rotary bearing, in particular a thrust bearing, such as a thrust ball bearing or a roller thrust bearing, for instance a cylindrical thrust roller bearing, a tapered roller thrust bearing, or a spherical roller thrust bearing. The boom support unit 8 may thus be supported on a thrust bearing.

Advantageously, the height-adjustable platform 6 can be fixedly attached to the boom support unit 8 such as to be rotatably together with said boom support unit 8 about the central axis of the tower 2, and said platform may then be a slewing platform 6. However, in alternative embodiments, said platform 6 may for instance be fixed to the external lifting unit 5 and may then not rotate with respect to said external lifting unit 5, but the system 1 may then allow the boom support unit 8 to rotate with respect to both said platform 6 and the external lifting unit 5. For instance, the boom support unit 8 may then be at least partly sandwiched between said platform 6 and said external lifting unit 5.

Advantageously, the height-adjustable platform 6, which may substantially enclose the tower 2, can have a concave round edge part 60, which may be formed by an inner edge 60 of said platform 6, and which substantially defines at least a part of a circle. Said edge 60 can be arranged to substantially fit on a convex round outer edge part of a local cross-section of the tower 2 at an exit level of the lift and/or staircase, which can also be considered an entry level of the lift and/or staircase, depending on whether people and/or cargo is transferred from the offshore object to the vessel or vice versa. Said platform's concave round edge part 60 can substantially define a circle and substantially enclose the tower 2. Additionally or alternatively, the convex round outer edge part of a respective local cross-section of the tower 2 at a respective exit level of the lift 3 and/or staircase can define a circular outer edge. For example, the circular outer edge may be defined by a substantially round cylindrical outer surface 24 of the tower 2. However, in alternative embodiments, the circular outer edge can be formed differently. For example, said circular outer edge can be defined by an outer edge of a stationary platform located at an outside of the tower at a respective exit level of the lift 3 and/or staircase. In particular, such a stationary platform may sidewardly protrude from the tower 2 and may be located at the bottom side of a door opening 9 in the tower 2 that provides access from the lift cab, and/or from a landing or other part of the staircase, to the stationary platform, and from there to the height-adjustable platform 6 when located at that height, or vice versa.

It is noted that the tower 2, also in other embodiments, may be provided with one or multiple door openings 9 through which one can move from the lift cab and/or the staircase to the height-adjustable platform or vice versa. In the here shown embodiment, the tower 2 is provided with three door openings 9, one above the other, for accessing the height-adjustable platform 6, in particular from the lift 3. However, in alternative embodiments, the tower may comprise another number of door openings 9, one above the other, for accessing the height-adjustable platform 6, such as for instance two, four or even more of such openings 9.

Actually, it may also be possible that the tower may be provided with a single door opening for accessing the height-adjustable platform 6. In such cases, the door opening may be a relatively high opening that for instance extends over a height being substantially larger than the height of the lift cab, or the height of a door or doors of said lift cab. For instance depending on the location to which the height-adjustable platform 6 and the lift cab are lifted, a different portion of such relatively high opening may then be used.

Regarding the motion compensated boom 7, which can preferably form a motion compensated gangway 7, may during use of the motion compensated transfer system 1 be at least partly actively compensated, preferably by means of real time active motion compensation, for example by means of one or more suitable controllers, which for example may get input from one or more motion-reference units, which for instance may include one or more sensors, especially motion sensors. However, in alternative embodiments, the motion compensated boom 7 may be compensated at least partly passively.

In embodiments, the motion compensated transfer system 1 can be arranged for luffing the motion compensated boom with respect to the boom support unit 8, which may be integrated with the height-adjustable platform 6, to compensate for at least a part of vessel movements, such as for instance at least a part of roll movement of the vessel. Thereto, the system 1 may be provided with one or more luffing cylinders 71, such as hydraulic cylinder actuators 71, or other actuators for so-called luffing, e.g. tilting the boom 7 with respect to the boom support unit 8 and the tower 2 about a substantially horizontal axis 70.

Further, the motion compensated transfer system 1 can be arranged for adapting the length of the motion compensated boom 7, which thus may be a telescopic boom 7, which in its most extended state may for instance be between 25 and 30 meter long, such as for example about 28 meter. The boom 7 can then not only be actively extended to a desired length in order to reach the offshore object, but the length of said telescopic boom 7 may, during use, then also be shortened and lengthened to compensate for movements of the vessel, and for instance also for movements of the offshore object, in order to keep the distal end portion of the boom relatively motionless with respect to a desired position on the offshore object. During transferring person and/or cargo, the length of the boom may be compensated actively or passively. For example, the boom 7 may be telescoped or extended by means of a constant tension winch. However, in alternative embodiments, shortening and lengthening may be done by other means, for instance by means of one or more telescoping cylinders.

It will be appreciated that the motion compensated transfer system 1 can also be arranged for slewing, actively or passively, the boom support unit 8 and the boom 7 about the central axis 22 of the tower 2 in order to compensate for at least a part of vessel movements.

In embodiments, the motion compensated transfer system 1 can be installed on a vessel. The vessel can for instance be a boat from which technicians can walk-to-work, such as to an offshore wind turbine. Alternatively, the vessel may for instance be an accommodation service ship and the gangway 7 of the motion compensated transfer system 1 may during use then form a relatively long-term connection between said ship and an offshore object, such as an oil or gas platform.

During use of the motion compensated transfer system 1, one or more persons may walk over the motion compensated boom 7, and may for instance carry luggage. Additionally or alternatively cargo may be transferred along the boom 7. For example, cargo can be handle by means of a trolley or the like that may be driven over the motion compensated boom 7. However, it is also possible that the boom 7 is provided with a cargo holding means, such as a hook or a container that can be moved along the motion compensated boom 7.

It is noted that for the purpose of clarity and a concise description features are described herein as part of the same or separate embodiments, however, it will be appreciated that the scope of the invention may include embodiments having combinations of all or some of the features described.

Further, it is noted that the invention is not restricted to the embodiments described herein. It will be understood that many variants are possible.

For example, in order to provide a continue access to the platform, an external access may be provided, for instance by means of a stairwell located adjacent to the motion compensated transfer system's tower, which stairwell for example may be temporarily connected to the motion compensated transfer system's height-adjustable platform by means of an additional gangway or gangplank. By means of such a continue access, people can continually walk from the vessel, which may for instance be an accommodation service ship, to a respective offshore object, such as an oil or gas platform, or vice versa.

Such and other variants will be apparent for the person skilled in the art and are considered to lie within the scope of the invention as formulated in the following claims.

## Claims

1. A motion compensated transfer system (1) for transferring persons and/or cargo from a vessel to an offshore object or vice versa, comprising a tower (2) provided with an external lifting unit carrying a platform (6) that together with the external lifting unit (5) is adjustable in height along at least a part of said tower (2), the tower (2) further being provided with a lift (3) and/or staircase housed in a shaft extending in said tower (2), said lift (3) and/or staircase being for enabling one or more persons and/or cargo to travel towards the height-adjustable platform (6) and/or for enabling to bring one or more persons and/or cargo down from said height-adjustable platform (6), the motion compensated transfer system (1) further comprising a motion compensated boom (7) arranged to extend, during use of the system (1), from the tower (2) in a substantially sideward direction to enable transferring persons and/or cargo along said motion compensated boom (7), said motion compensated boom (7) being attached to a boom support unit (8), wherein said boom support unit (8) is rotatably carried by the external lifting unit (5) such as to be rotatable with respect to said external lifting unit (5) about a central axis (22) of the tower (2).

2. The motion compensated transfer system (1) according to claim 1, wherein, seen in a circumferential direction of the tower (2), the external lifting unit (5) engages the tower (2) at multiple positions, and wherein, seen in said circumferential direction of the tower (2), any two adjacent positions at which the external lifting unit (5) engages the tower (2), are not put apart over more than 180°, preferably over not more than 120°.

3. The motion compensated transfer system (1) according to any one of the preceding claims, wherein the external lifting unit (5) is formed as a lifting collar (5) substantially enclosing the tower (2).

4. The motion compensated transfer system (1) according to any one of the preceding claims, wherein the boom support unit (8) is substantially enclosing the tower (2).

5. The motion compensated transfer system (1) according to any one of the preceding claims, wherein, seen in a circumferential direction of the tower (2), the boom support unit (8) engages the external lifting unit (5) at multiple positions such that, seen in said circumferential direction of the tower (2), any two adjacent positions at which the boom support unit (8) engages the external lifting unit (5), are not put apart over more than 180°, preferably over not more than 120°.

6. The motion compensated transfer system (1) according to any one of the preceding claims, wherein the height-adjustable platform (6) is attached to the boom support unit (8) and can be rotated together with the boom support unit (8) about the central axis (22) of the tower (2).

7. The motion compensated transfer system (1) according to any one of the preceding claims, wherein the height-adjustable platform (6) substantially encloses the tower (2).

8. The motion compensated transfer system (1) according to any one of the preceding claims, wherein the platform (6) has a concave round edge part (60), substantially defining at least a part of a circle, and being arranged to substantially fit on a convex round outer edge part of a local cross-section of the tower (2) at an exit level of the lift (3) and/or staircase.

9. The motion compensated transfer system (1) according to claim 8, wherein the platform's concave round edge part (60) substantially defines a circle and substantially encloses the tower (2).

10. The motion compensated transfer system (1) according to claim 8 or 9, wherein the convex round outer edge part of a respective local cross-section of the tower (2) at a respective exit level of the lift (3) and/or staircase defines a circular outer edge.

11. The motion compensated transfer system according to claim 10, wherein the circular outer edge is defined by a substantially round cylindrical outer surface (24) of the tower (2).

12. The motion compensated transfer system (1) according to claim 10, wherein the circular outer edge is formed by an outer edge of a stationary platform located at an outside of the tower (2) at a respective exit level of the lift (3) and/or staircase.

13. The motion compensated transfer system (1) according to any one of the preceding claims,
wherein the motion compensated boom (7) is a motion compensated gangway (7), and/or
wherein the motion compensated transfer system (1) is arranged for luffing the motion compensated boom (7) with respect to the boom support unit (8) to compensate for at least a part of vessel movements, and/or
wherein the motion compensated boom (7) is a telescopic boom (7) and the motion compensated transfer system (1) is arranged for adapting the length of said telescopic boom (7) to compensate for at least a part of vessel movements, and/or
wherein the motion compensated transfer system (1) is arranged for slewing the boom support unit (8) and the boom (7) about the central axis (22) of the tower (2) to compensate for at least a part of vessel movements.

14. A vessel provided with the motion compensated transfer system (1) according to any one of the preceding claims.

15. A use of the motion compensated transfer system (1) according to any one of claims 1-13 or the vessel according to claim 14 to transfer persons and/or cargo from a vessel to an offshore object or vice versa.

## Patentansprüche

1. Bewegungskompensiertes Transfersystem (1) zum Transfer von Personen und/oder Fracht von einem Schiff zu einem Offshore-Objekt oder umgekehrt, welches einen Turm (2) umfasst, der mit einer externen Hubeinheit versehen ist, die eine Plattform (6) trägt, die zusammen mit der externen Hubeinheit (5) in ihrer Höhe entlang mindestens eines Teils des Turms (2) verstellbar ist, wobei der Turm (2) ferner mit einem Aufzug (3) und/oder einer Treppe versehen ist, der/die in einem sich im Turm (2) erstreckenden Schacht untergebracht ist, wobei der Aufzug (3) und/oder die Treppe dazu dient, eine oder mehrere Personen und/oder Fracht in Richtung der höhenverstellbaren Plattform (6) zu befördern und/oder eine oder mehrere Personen und/oder Fracht von der höhenverstellbaren Plattform (6) herunterzubringen, wobei das bewegungskompensierte Transfersystem (1) ferner einen bewegungskompensierten Ausleger (7) umfasst, der so angeordnet ist, dass er sich während der Verwendung des Systems (1) von dem Turm (2) in einer nahezu seitlichen Richtung erstreckt, um den Transfer von Personen und/oder Fracht entlang des bewegungskompensierten Auslegers (7) zu ermöglichen, wobei der bewegungskompensierte Ausleger (7) an einer Auslegerträgereinheit (8) befestigt ist, wobei die Auslegerträgereinheit (8) drehbar von der externen Hubeinheit (5) getragen wird, so dass sie in Bezug auf die externe Hubeinheit (5) um eine Mittelachse (22) des Turms (2) drehbar ist.

2. Bewegungskompensiertes Transfersystem (1) nach Anspruch 1, wobei, betrachtet in Umfangsrichtung des Turms (2), die externe Hubeinheit (5) an mehreren Positionen in den Turm (2) eingreift, und wobei, betrachtet in der Umfangsrichtung des Turms (2), jede der zwei benachbarten Positionen, an denen die externe Hubeinheit (5) in den Turm (2) eingreift, nicht mehr als 180°, vorzugsweise nicht mehr als 120°, voneinander entfernt sind.

3. Bewegungskompensiertes Transfersystem (1) nach einem der vorhergehenden Ansprüche, wobei die externe Hubeinheit (5) als Hubkragen (5) ausgebildet ist, der den Turm (2) nahezu umschließt.

4. Bewegungskompensiertes Transfersystem (1) nach einem der vorhergehenden Ansprüche, wobei die Auslegerträgereinheit (8) den Turm (2) nahezu umschließt.

5. Bewegungskompensiertes Transfersystem (1) nach einem der vorhergehenden Ansprüche, wobei die Auslegerträgereinheit (8) in Umfangsrichtung des Turms (2) betrachtet in die externe Hubeinheit (5) an mehreren Positionen eingreift, wodurch in der Umfangsrichtung des Turms (2) betrachtet jede der zwei benachbarten Positionen, an denen die Auslegerträgereinheit (8) in die externe Hubeinheit (5) eingreift, nicht mehr als 180° voneinander entfernt sind, vorzugsweise nicht mehr als 120°.

6. Bewegungskompensiertes Transfersystem (1) nach einem der vorhergehenden Ansprüche, wobei die höhenverstellbare Plattform (6) an der Auslegerträgereinheit (8) befestigt ist und zusammen mit der Auslegerträgereinheit (8) um die Mittelachse (22) des Turms (2) gedreht werden kann.

7. Bewegungskompensiertes Transfersystem (1) nach einem der vorhergehenden Ansprüche, wobei die höhenverstellbare Plattform (6) den Turm (2) nahezu umschließt.

8. Bewegungskompensiertes Transfersystem (1) nach einem der vorhergehenden Ansprüche, wobei die Plattform (6) ein konkaves rundes Randstück (60) aufweist, das nahezu zumindest einen Teil eines Kreises definiert und so angeordnet ist, dass es nahezu auf ein konvexes rundes Außenrandstück eines lokalen Querschnitts des Turms (2) auf einer Ausgangsebene des Aufzugs (3) und/oder der Treppe passt.

9. Bewegungskompensiertes Transfersystem (1) nach Anspruch 8, wobei das konkave runde Randstück (60) der Plattform nahezu einen Kreis definiert und den Turm (2) nahezu umschließt.

10. Bewegungskompensiertes Transfersystem (1) nach Anspruch 8 oder 9, wobei das konkave runde Außenrandstück eines jeweiligen lokalen Querschnitts des Turms (2) auf der jeweiligen Ausgangsebene des Aufzugs (3) und/oder der Treppe einen kreisförmigen Außenrand definiert.

11. Bewegungskompensiertes Transfersystem nach Anspruch 10, wobei der kreisförmige Außenrand durch eine nahezu runde zylindrische Außenfläche (24) des Turms (2) definiert ist.

12. Bewegungskompensiertes Transfersystem (1) nach Anspruch 10, wobei der kreisförmige Außenrand durch einen Außenrand einer unbeweglichen Plattform gebildet wird, die sich an einer Außenseite des Turms (2) auf einer jeweiligen Ausgangsebene des Aufzugs (3) und/oder der Treppe befindet.

13. Bewegungskompensiertes Transfersystem (1) nach einem der vorhergehenden Ansprüche,
wobei der bewegungskompensierte Ausleger (7) ein bewegungskompensierter Laufsteg (7) ist, und/oder
wobei das bewegungskompensierte Transfersystem (1) zum vertikalen Bewegen des bewegungskompensierten Auslegers (7) in Bezug auf die Auslegerträgereinheit (8) angeordnet ist, um zumindest einen Teil der Schiffsbewegungen zu kompensieren, und/oder
wobei der bewegungskompensierte Ausleger (7) ein Teleskopausleger (7) ist, und das bewegungskompensierte Transfersystem (1) so angeordnet ist, dass es sich an die Länge des Teleskopauslegers (7) anpasst, um zumindest einen Teil der Schiffsbewegungen zu kompensieren, und/oder
wobei das bewegungskompensierte Transfersystem (1) zum Schwenken der Auslegerträgereinheit (8) und des Auslegers (7) um die Mittelachse (22) des Turms (2) angeordnet ist, um zumindest einen Teil der Schiffsbewegungen zu kompensieren.

14. Schiff mit einem bewegungskompensierten Transfersystem (1) nach einem der vorhergehenden Ansprüche.

15. Verwendung des bewegungskompensierten Transfersystems (1) nach einem der Ansprüche 1 bis 13 oder des Schiffes nach Anspruch 14 zum Transfer von Personen und/oder Fracht von einem Schiff zu einem Offshore-Objekt oder umgekehrt.

## Revendications

1. Système de transfert à compensation de mouvement (1) pour transférer des personnes et/ou un chargement d'un navire vers une structure en mer ou vice versa, comprenant une tour (2) pourvue d'une unité de levage externe portant une plateforme (6) qui, conjointement avec l'unité de levage externe (5), est ajustable en hauteur le long d'au moins une partie de ladite tour (2), la tour (2) étant en outre pourvue d'un ascenseur (3) et/ou d'un escalier logé dans une gaine s'étendant dans ladite tour (2), ledit ascenseur (3) et/ou escalier logé dans une gaine s'étendant dans ladite tour (2), ledit ascenseur (3) et/ou escalier étant destiné à permettre à une ou plusieurs personnes et/ou à un chargement de se déplacer vers la plateforme ajustable en hauteur (6) et/ou à permettre à une ou plusieurs personnes et/ou à un chargement de descendre de ladite plateforme ajustable en hauteur (6), le système de transfert à compensation de mouvement (1) comprenant en outre une flèche à compensation de mouvement (7) agencée pour s'étendre, pendant l'utilisation du système (1), à partir de la tour (2) dans une direction sensiblement latérale afin de permettre le transfert de personnes et/ou d'un chargement le long de ladite flèche à compensation de mouvement (7), ladite flèche à compensation de mouvement (7) étant fixée à une unité de support de flèche (8), dans lequel ladite unité de support de flèche (8) est portée de manière rotative par l'unité de levage externe (5) de manière à pouvoir être mise en rotation par rapport à ladite unité de levage externe (5) autour d'un axe central (22) de la tour (2).

2. Système de transfert à compensation de mouvement (1) selon la revendication 1, dans lequel, en regardant dans une direction circonférentielle de la tour (2), l'unité de levage externe (5) vient en prise avec la tour (2) dans de multiples positions, et dans lequel, en regardant dans ladite direction circonférentielle de la tour (2), deux positions adjacentes quelconques au niveau desquelles l'unité de levage externe (5) vient en prise avec la tour (2), ne sont pas écartées de plus de 180°, de préférence de plus de 120°.

3. Système de transfert à compensation de mouvement (1) selon l'une quelconque des revendications précédentes, dans lequel l'unité de levage externe (5) est formée sous la forme d'un collier de levage (5) entourant sensiblement la tour (2).

4. Système de transfert à compensation de mouvement (1) selon l'une quelconque des revendications précédentes, dans lequel l'unité de support de flèche (8) entoure sensiblement la tour (2).

5. Système de transfert à compensation de mouvement (1) selon l'une quelconque des revendications précédentes, dans lequel, en regardant dans une direction circonférentielle de la tour (2), l'unité de support de flèche (8) vient en prise avec l'unité de levage externe (5) dans de multiples positions de sorte qu'en regardant dans ladite direction circonférentielle de la tour (2), deux positions adjacentes quelconques au niveau desquelles l'unité de support de flèche (8) vient en prise avec l'unité de levage externe (5), ne sont pas écartées de plus de 180°, de préférence de plus de 120°.

6. Système de transfert à compensation de mouvement (1) selon l'une quelconque des revendications précédentes, dans lequel la plateforme ajustable en hauteur (6) est fixée à l'unité de support de flèche (8) et peut être mise en rotation avec l'unité de support de flèche (8) autour de l'axe central (22) de la tour (2).

7. Système de transfert à compensation de mouvement (1) selon l'une quelconque des revendications précédentes, dans lequel la plateforme ajustable en hauteur (6) entoure sensiblement la tour (2).

8. Système de transfert à compensation de mouvement (1) selon l'une quelconque des revendications précédentes, dans lequel la plateforme (6) présente une partie de bord ronde concave (60), définissant sensiblement au moins une partie d'un cercle, et étant agencée pour s'adapter sensiblement sur une partie de bord extérieur ronde convexe d'une section transversale locale de la tour (2) à un niveau de sortie de l'ascenseur (3) et/ou de l'escalier.

9. Système de transfert à compensation de mouvement (1) selon la revendication 8, dans lequel la partie de bord ronde concave (60) de la plateforme définit sensiblement un cercle et entoure sensiblement la tour (2).

10. Système de transfert à compensation de mouvement (1) selon la revendication 8 ou 9, dans lequel la partie de bord extérieur ronde convexe d'une section transversale locale respective de la tour (2) à un niveau de sortie respectif de l'ascenseur (3) et/ou de l'escalier définit un bord extérieur circulaire.

11. Système de transfert à compensation de mouvement selon la revendication 10, dans lequel le bord extérieur circulaire est défini par une surface extérieure cylindrique sensiblement ronde (24) de la tour (2).

12. Système de transfert à compensation de mouvement (1) selon la revendication 10, dans lequel le bord extérieur circulaire est formé par un bord extérieur d'une plateforme stationnaire située à l'extérieur de la tour (2) à un niveau de sortie respectif de l'ascenseur (3) et/ou de l'escalier.

13. Système de transfert à compensation de mouvement (1) selon l'une quelconque des revendications précédentes,
dans lequel la flèche à compensation de mouvement (7) est une passerelle à compensation de mouvement (7), et/ou
dans lequel le système de transfert à compensation de mouvement (1) est agencé pour relever la flèche à compensation de mouvement (7) par rapport à l'unité de support de flèche (8) afin de compenser au moins une partie des mouvements de navire, et/ou
dans lequel la flèche à compensation de mouvement (7) est une flèche télescopique (7) et le système de transfert à compensation de mouvement (1) est agencé pour adapter la longueur de ladite flèche télescopique (7) afin de compenser au moins une partie des mouvements de navire, et/ou
dans lequel le système de transfert à compensation de mouvement (1) est agencé pour faire pivoter l'unité de support de flèche (8) et la flèche (7) autour de l'axe central (22) de la tour (2) afin de compenser au moins une partie des mouvements de navire.

14. Navire muni du système de transfert à compensation de mouvement (1) selon l'une quelconque des revendications précédentes.

15. Utilisation du système de transfert à compensation de mouvement (1) selon l'une quelconque des revendications 1 à 13 ou du navire selon la revendication 14 pour transférer des personnes et/ou un chargement d'un navire vers une structure en mer ou vice versa.
